# EUROPÄISCHE PATENTSCHRIFT

(11) **EP 1 073 352 B1**
(45) Veröffentlichungstag und Bekanntmachung des Hinweises auf die Patenterteilung: **11.09.2002**
(21) Anmeldenummer: 99917987.2
(22) Anmeldetag: 16.04.1999
(51) Int. Cl.: A46B 11/00

(54) **VERFAHREN ZUR HERSTELLUNG EINER ZAHNBÜRSTE AUS KUNSTSTOFF**
METHOD FOR PRODUCING A PLASTIC TOOTHBRUSH
PROCEDE POUR LA FABRICATION D'UNE BROSSE A DENTS EN PLASTIQUE

(30) Priorität: 24.04.1998 DE 19818553
(43) Veröffentlichungstag der Anmeldung: 07.02.2001
(73) Patentinhaber: F.A. Rueb Holding GmbH, 79677 Schönau (DE)
(72) Erfinder: RUEB, Fritz, A., D-79677 Schönau (DE)
(74) Vertreter: Patent- und Rechtsanwaltssozietät, Maucher, Börjes & Kollegen
(86) Internationale Anmeldenummer: EP9902560
(87) Internationale Veröffentlichungsnummer: WO99055194

(56) Entgegenhaltungen:
- EP-A- 0 332 026
- EP-A- 0 405 204
- EP-A- 0 700 259

## Beschreibung

Die Erfindung betrifft ein Verfahren zur Herstellung einer Zahnbürste aus Kunststoff, insbesondere einer Wechselzahnbürste, bei welcher ein Borstenträger und die Borsten aus Kunststoff bestehen, wobei zunächst ein Halteende und ein Benutzungsende aufweisende Borsten insbesondere zu Borstenbüscheln zusammengefaßt und die Halteenden in Lochungen einer Halteplatte oder des Zahnbürstenkörpers eingebracht werden, wonach die an der Halteplatte oder dem Bürstenkörper auf der den Benutzungsenden abgewandten Seite befindlichen Halteenden der Borsten miteinander und/oder mit der Halteplatte oder dem Bürstenkörper verschmolzen werden.

Ein derartiges Verfahren ist beispielsweise aus der EP-0 405 204 B1 bekannt und hat sich bewährt. Die Anordnung der Borsten und ihre Verschmelzung an eine Halteplatte ist dabei speziell in Fig.8 dargestellt, wobei die Halteplatte mit den Borsten einen Wechselkopf einer Wechselzahnbürste bilden kann, während die Anordnung der Borsten an dem Bürstenkörper selbst und ihr Verschmelzen an diesem Bürstenkörper durch Fig.9 angedeutet wird.

Die Anordnung als Wechselzahnbürste ist ferner aus GM-91 09 625 U und aus DE-196 00 767 C1 bekannt. All diese Zahnbürsten und ihr Herstellungsverfahren haben sich bewährt.

Zahnbürsten sind aufgrund ihrer Aufgabe, Speisereste auf und zwischen den Zähnen zu entfernen, einem Bakterienbefall ausgesetzt. Die Speisereste können sich nämlich zwischen den Filamenten oder Borsten so festsetzen, daß ein Entfernen schwierig und unter Umständen gar nicht möglich ist, also Speisereste auch nach dem Ausspülen der Zahnbürste nicht vollständig entfernt sind. Durch solche an den Zahnbürsten sich entwickelnde Bakterienstämme sind Zahnkrankheiten wie Alveolitis peris dentosis usw. möglich.

Zwar wird versucht, dem durch in der Zahnpasta befindliche Mittel vorzubeugen, jedoch haben diese Mittel, wenn überhaupt, nur einen relativ geringen Einfluß auf die Keim- und Bakterienbildung durch im Borstenfeld festsitzende Speisereste.

Es wurde deshalb gemäß EP-0 795 284 A2 versucht, durch Magnetprojektion auf bzw. im Zahnbürstengriff dem Keim- und Bakterienbefall Herr zu werden. Dieses Verfahren hat sich auf dem Markt nicht durchgesetzt.

Gemäß kanadischem Patent 1 285 110 ist es bekannt, auf fotoelektrisch-chemischem Weg eine keimtötende Wirkung durch einen Ionenfluß zu erzielen. Dafür müssen jedoch Batterien oder andere elektrische Stromquellen eingesetzt werden, so daß die Herstellung einer solchen Zahnbürste sehr aufwendig wird und den zusätzlichen Nachteil hat, daß Batterien benötigt und verbraucht werden.

Ein anderer Weg ist in der EP-0 700 259 B1 beschrieben. Demgemäß werden die Borsten mit Ankerplättchen aus oligodynamischem Material im Bürstenkörper verankert. Oligodynamisches Material wirkt in homöopathisch kleinen Mengen von Schwermetallen und dient zur Vermeidung bzw. Abtötung von Mikroorganismen. Die Herstellung solcher Ankerplättchen oder eines Ankerstanzdrahtes, aus welchem diese gefertigt werden, ist mit erheblichen Kosten verbunden, da die Einarbeitung von oligodynamischem Material in den Flachdraht schwierig ist.

Darüber hinaus werden in fortschrittlichen Herstellungsverfahren gemäß EP-0 405 204 keine Ankerplättchen oder Ankerstanzdrähte zur Befestigung der Borsten verwendet, da diese verschweißt bzw. verschmolzen werden.

Es wurde deshalb auch schon vorgeschlagen, Puder von bakterizidem Zeolith in geschmolzenes Kunstharz einzumischen und aus dieser Mischung Filamente oder Borsten herzustellen. Dies bedeutet einen zusätzlichen aufwendigen Arbeitsgang, bevor die eigentliche Zahnbürste gefertigt werden kann.

Ferner wurde schon vorgeschlagen, schrittweise Silberionen auf Borstenoberflächen zu eloxieren, was ebenfalls aufwendig ist.

Es besteht deshalb die Aufgabe, die Vorteile des eingangs erwähnten Verfahrens einer einfachen, schnellen und die Borsten gut festlegenden Herstellung beizubehalten und gleichzeitig die so gefertigte Zahnbürste auf einfache Weise antibakteriell wirksam zu machen.

Die überraschende Lösung dieser scheinbar widersprüchlichen Aufgabe besteht darin, daß vor dem Verschmelzen auf wenigstens einen Teil der Halteenden der Borsten oligodynamisches Material aufgetragen wird, daß dann die Halteenden miteinander verschweißt und/oder verschmolzen werden und daß dabei das oligodynamische Material in den erweichten oder verflüssigten Kunststoff eingedrückt und verteilt wird.

Dabei kann es genügen, das oligodynamische Material nur bereichsweise aufzutragen. Noch günstiger ist es jedoch, wenn das oligodynamische Material an den Halteenden aller Borstenbüschel aufgetragen wird.

Eine zweite Lösung der Aufgabe kann darin bestehen, daß nach dem Verschweißen und/oder Verschmelzen der Halteenden der Borsten miteinander und/oder mit der Halteplatte oder dem Bürstenkörper auf die Schmelzstellen zumindest bereichsweise oligodynamisches Material aufgetragen wird, welches in den Kunststoff und in die Borsten eindringt.

In beiden Fällen ergibt sich also lediglich ein kleiner, wenig aufwendiger zusätzlicher Verfahrensschritt, nämlich das punktuelle oder flächige Auftragen des oligodynamischen Materiales auf die Halteenden der Borsten, sei es vor ihrem Verschmelzen oder danach. Im übrigen bleibt das vorteilhafte bekannte Herstellungsverfahren für die Zahnbürsten unverändert. Dabei ist dieses Verfahren besonders günstig anwendbar bei Wechselköpfen gemäß DE-196 00 767.4 oder bei Wechselköpfen oder Zahnbürsten, die im Schmelzverfahren ohne Verwendung von Ankerplättchen gemäß EP-0 405 204 B1 hergestellt sind. Dabei kann das oligodynamische Material hervorragend in die Schmelze eingebracht werden, die durch das Anschmelzen der Borsten bei ihrem gegenseitigen Verschmelzen und dem Verschmelzen mit der Halteplatte oder dem Bürstenkörper entsteht.

Die Erfindung macht sich die Erkenntnis zunutze, daß durch diese in die Schmelze eingearbeiteten oder nachträglich auf die Schmelzstellen aufgetragenen oligodynamischen Mittel nach Benetzung durch Wasser oder Sputum Ionenflüsse freigesetzt werden, welche durch Kapillarwirkung oder durch Diffusion in die Borstenfilamente fließen und dort eine antibakterielle Wirkung erzeugen. Die Menge an oligodynamischem Material, welche notwendig ist, um einen Bakterienbefall zu vermeiden und eine Anreicherung zu verhindern, kann entsprechend der für solche Zahnbürsten oder ihre Wechselköpfe vorgesehenen Benutzungszeit gewählt werden, da es für das oligodynamische Mittel eine gewisse Auswaschzeit gibt.

Der oligodynamische Effekt, das heißt, die Wachstumshemmung von Mikroorganismen durch die Anwesenheit von Spuren von Metallionen, ist bereits über 100 Jahre bekannt. Von Bedeutung sind insbesondere die Metalle Cadmium, Silber, Kupfer oder Quecksilber. Dabei nimmt die oligodynamische Wirkung in der genannten Reihenfolge bei diesen Metallen ab. Von besonderer technischer Bedeutung ist insbesondere Silber oder seine Salze, welches bereits seit Jahrzehnten bei der Entkeimung von Trinkwasser eingesetzt wird. Die Wirkungsweise beruht auf der Tatsache, daß sich positiv geladene Ionen an den Zellen der Mikroorganismen anlagern und diese irreversibel schädigen. Dabei genügt eine ganz geringe Silberkonzentration, die eine Schädigung höherer Organismen oder des Menschen ausschließt.

Besonders zweckmäßig ist es zur Durchführung der erfindungsgemäßen Verfahren, wenn die Borsten oder Borstenbüschel derart ausgerichtet werden, daß ihre zu verschmelzenden Halteenden beim Verschmelzen oder Verschweißen höher als die Benutzungsenden angeordnet sind und in etwa einer Ebene liegen, und wenn das oligodynamische Material auf dieser Ebene aufgetragen, beispielsweise als Suspension oder Lösung oder Dispersion aufgestrichen, aufgesprüht, aufgetropft und/oder aufgedruckt wird. Das oligodynamische Material wird auf diese Weise von vorneherein durch Schwerkraft festgelegt und kann anschließend in die zu verschmelzenden oder schon verschmolzenen Halteenden eindringen.

Besonders günstig ist es dabei, wenn die Borsten oder Borstenbüschel beim Verschmelzen und Verschweißen etwa vertikal angeordnet sind und die zu verschweißenden und zu verschmelzenden Halteenden in einer etwa horizontalen Ebene liegen, auf die das oligodynamische Material vor oder nach dem Verschmelzen aufgetragen wird. Es brauchen dann keine besonderen Vorkehrungen getroffen zu werden, um eine möglichst gleichmäßige Verteilung des oligodynamischen Materiales aufrechtzuerhalten, bis es in den Kunststoff eingearbeitet oder eingedrungen ist.

Das oligodynamische Material, beispielsweise Silber oder Silbersalz, insbesondere Silberchlorid, kann mit einem Kunststoff, beispielsweise Polyamid, vermischt und in einem Lösungsmittel wie 2,2,2 Trifluorethanol gelöst und die Halteenden der Borsten können vor oder nach dem Verschmelzen mit dieser Mischung benetzt oder beschichtet werden. Das Silber kann also in kollidoialer Form aufgebracht werden und läßt sich in der erwähnten Mischung besonders gut in den Kunststoff der Borsten und ihrer Halteplatte oder des Bürstenkörpers einbringen.

Die Halteenden der insbesondere vertikal ausgerichteten Borsten können beim Verschmelzen so weit erweicht oder verflüssigt werden, daß das oligodynamische Material durch Schwerkraft von den Halteenden aus in Richtung zu den Benutzungsenden in die Borsten eindringt. Unterstützt werden kann dies aber auch noch durch den das Anschmelzen bewirkenden Schmelzstempel.

Damit die oligodynamische Wirkung nicht zu schnell dadurch verlorengeht, daß das oligodynamische Material bei der Benutzung der Zahnbürste auch an den Halteenden ausgewaschen wird, ist es zweckmäßig, wenn die miteinander verschmolzenen und mit oligodynamischem Material versehenen Halteenden abgedeckt werden, indem die Halteplatte mit den Borsten als Wechselkopf in eine Aussparung der Zahnbürste eingefügt oder an einer mit den Borsten versehenen Zahnbürste eine Abdeckplatte angebracht wird.

Insgesamt ergibt sich durch die vorbeschriebenen Verfahren und Maßnahmen eine Zahnbürste, die in einfacher Weise mit den modernen bisherigen Verfahren hergestellt und dennoch mit einer ausreichenden Menge an oligodynamischem Material versehen werden kann. Durch die flüssige Applikation kann ein inniger Kontakt mit der Oberfläche sichergestellt werden. Dabei entsteht durch die feine Verteilung des Silbers eine entsprechend große Oberfläche, die die Ionenabgabe begünstigt und beschleunigt, was noch verbessert werden kann, wenn Salze von Silber oder mit Silber angereicherte Austauscherharze der Dispersion zugegeben werden. Kommt die Zahnbürste - durch ihren Gebrauch bedingt - mit Wasser in Kontakt, werden durch Diffusions- und Kappilaritätskräfte die Ionen bis zur Borstenspitze am Benutzungsende transportiert.

Dieser Effekt kann durch die hydrophilen Eigenschaften des Polyamids verstärkt werden, aus welchem die Borsten bevorzugt bestehen. Somit ergibt sich schon nach einer kurzen Gebrauchsdauer, daß die Borsten vollständig mit dem oligodynamischen Material durchsetzt sind und bei genügender Menge des aufgebrachten oder eingearbeiteten oligodynamischen Werkstoffes ergibt sich eine vollständige Sättigung der Borsten mit diesem Material.

Nachstehend sind Ausführungsbeispiele der Erfindung anhand der Zeichnung beschrieben. Es zeigt in schematisierter Darstellung:
- Fig.1: eine Halteplatte mit Lochungen, welche jeweils ein aus Borsten bestehendes Borstenbüschel aufweisen, wobei die Borsten vertikal angeordnet sind und ihre Halteenden mit oligodynamischem Material beschichtet sind, bevor sie durch einen elektrisch heizbaren Schmelzstempel miteinander verschmolzen und verschweißt werden,
- Fig.2: die Halteplatte gemäß Fig.1 insbesondere als Wechselkopf für eine Zahnbürste nach dem Verschmelzen und dem dadurch bewirkten Einarbeiten des oligodynamischen Materiales in den Kunststoff der Borsten,
- Fig.3: den gemäß Fig.1 und 2 hergestellten Wechselkopf einer Zahnbürste vor dem insbesondere lösbaren und austauschbaren Einfügen in eine Ausnehmung eines Zahnbürstenkörpers sowie
- Fig.4: eine abgewandelte Ausführungsform, bei welcher die Lochungen für die Borsten in einem Zahnbürstenkörper innerhalb einer Vertiefung angeordnet sind, der dadurch selbst die Halteplatte bildet, nach dem Verschweißen der Borstenenden und dem Einarbeiten des oligodynamischen Materiales und vor dem Abdecken durch eine Abdeckplatte.

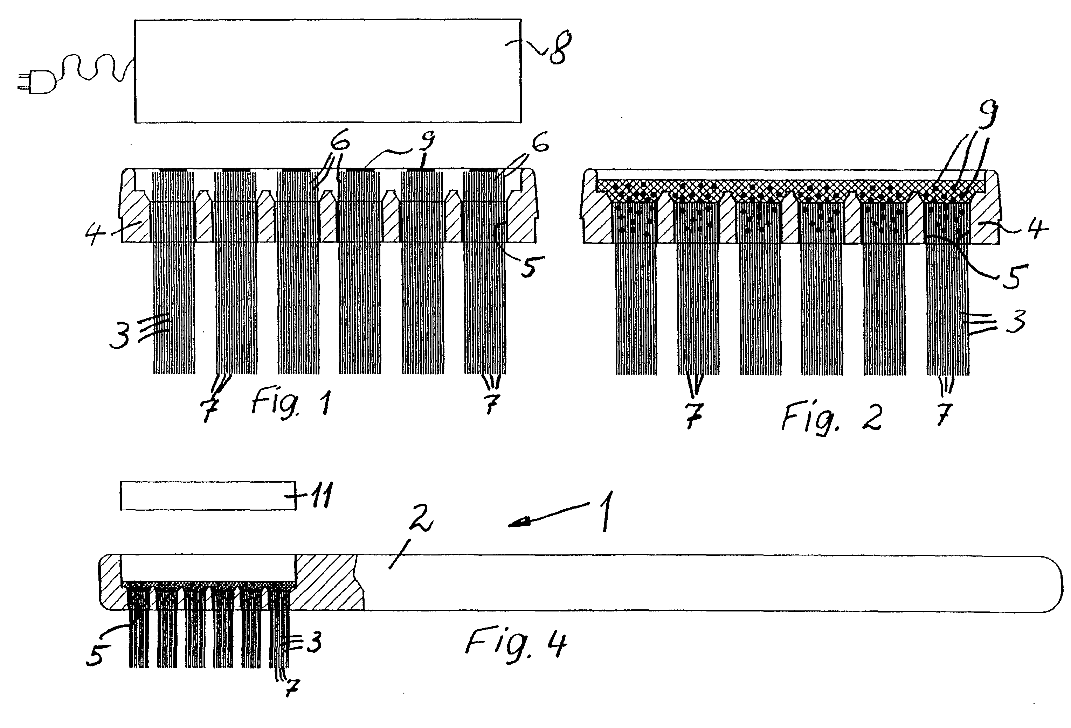

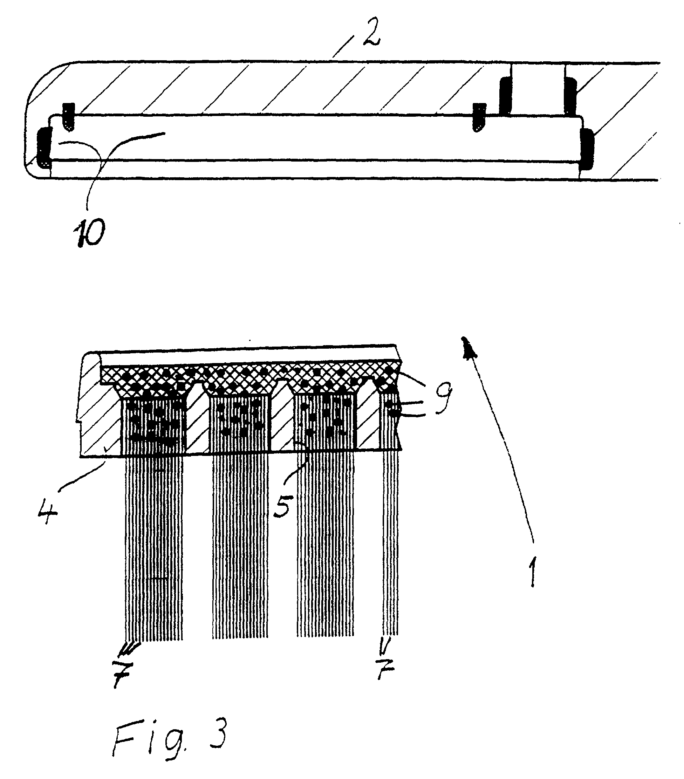

Eine im ganzen mit 1 bezeichnete Zahnbürste aus Kunststoff, beispielsweise eine Wechselzahnbürste gemäß Fig.3, aber auch eine Zahnbürste mit unmittelbar am Zahnbürstenkörper 2 angebrachten Borsten 3 aus Kunststoff kann dadurch hergestellt werden, daß ein Borstenträger in Form einer Halteplatte 4 oder in Form des Zahnbürstenkörpers 2 mit Lochungen 5 vorgesehen wird und zunächst ein Halteende 6 und ein Benutzungsende 7 aufweisende Borsten 3 zweckmäßigerweise zu Borstenbüscheln zusammengefaßt und die Halteenden 6 in der in Fig.1 erkennbaren Weise in die Lochungen 5 der Halteplatte 4 oder des Zahnbürstenkörpers 2 eingebracht werden. Danach werden die an der Halteplatte 4 oder dem Bürstenkörper 2 auf der den Benutzungsenden 7 abgewandten Seite befinglichen Halteenden 6 der Borsten 3 mit Hilfe eines Schmelzstempels 8 miteinander und gegebenenfalls auch mit der Halteplatte 4 oder dem Bürstenkörper 2 verschmolzen, wobei gemäß den Figuren 2 bis 4 auch die Halteenden 6 eines Borstenbüschels mit denen des benachbarten Borstenbüschels verschmolzen werden können.

In Fig.1 ist angedeutet, daß vor dem Verschmelzen auf den Halteenden 6 der Borsten 3 oligodynamisches Material 9 aufgetragen wird, wonach dann die Halteenden 6 in der schon erwähnten Weise miteinander verschweißt oder verschmolzen werden. Dabei wird das oligodynamische Material 9 in den erweichten oder verflüssigten Kunststoff durch den Schmelzstempel 8 eingedrückt und somit verteilt, was in Fig.2 bis 4 jeweils angedeutet ist. Im Ausführungsbeispiel wird dabei das oligodynamische Material 9 an den Halteenden 6 aller Borstenbüschel aufgetragen, jedoch kann es unter Umständen auch genügen, wenn das oligodynamische Material nur partiell aufgetragen wird.

Fig.2 und 4 kann außerdem auch als Darstellung eines abgewandelten Verfahrens aufgefaßt werden, bei welchem das oligodynamische Material nach dem Verschmelzen der Halteenden 6 der Borsten 3 miteinander und/oder mit der Halteplatte 4 oder dem Bürstenkörper 2 auf die Schmelzstellen zumindest bereichsweise aufgetragen wird und dann in den Kunststoff und in die Borsten 3 eindringt. Es hat sich nämlich gezeigt, daß unter Einwirkung von Feuchtigkeit oligodynamisches Material in entsprechend ausgewählten Kunststoff durch Osmose oder Kappilarkräfte eindringen und diese bis zu den Benutzungsenden 7 hin durchdringen kann.

Bei der Anwendung beider Verfahren sind die Borsten 3 bzw. die von ihnen gebildeten Borstenbüschel vertikal angeordnet, wobei die zu verschmelzenden Halteenden 6 höher als die Benutzungsenden 7 angeordnet sind, also eine obere horizontale Ebene bilden, auf welche das oligodynamische Material vor oder auch nach dem Verschmelzen aufgetragen werden kann, beispielsweise als Suspension, Lösung oder Dispersion. Somit kann es gut von oben her in den Kunststoff eindringen und der so hergestellten Zahnbürste 1 die gewünschte antibakterielle Wirkung verleihen.

Die miteinander verschmolzenen und mit oligodynamischem Material versehenen Halteenden 6 werden abschließend abgedeckt, indemgemäß Fig.3 die Halteplatte 4 mit den Borsten 3 als Wechselkopf in eine Aussparung 10 des Zahnbürstenkörpers 2 eingefügt werden. Die andere Möglichkeit gemäß Fig.4 sieht vor, daß an einem mit den Borsten 3 unmittelbar innerhalb einer Aussparung versehenen Zahnbürstenkörper 2 eine Abdeckplatte 11 zur Abdeckung angebracht wird. Dadurch wird erreicht, daß das oligodynamische Material nicht teilweise wieder an dem Bereich der verschmolzenen Halteenden 6 ausgewaschen werden kann.

Zur Herstellung einer Zahnbürste aus Kunststoff, insbesondere mit einem Wechselkopf, werden die Halteenden 6 von Borsten 3 durch Lochungen 5 einer Halteplatte 4 oder eines Zahnbürstenkörpers 2 so hindurchgesteckt, daß sie darüber etwas überstehen. Diese Halteenden 4 der Borsten 3 werden miteinander und/oder mit der Halteplatte 4 oder dem Bürstenkörper 2 verschmolzen. Dabei kann vor oder nach dem Verschmelzen wenigstens bereichsweise, zweckmäßigerweise jedoch ganzflächig, auf die Halteenden 6 der Borsten 3 oligodynamisches Material 9 insbesondere in flüssiger Form aufgetragen werden, welches entweder beim Verschmelzen in die Schmelze eingearbeitet oder beim Auftragen nach dem Verschmelzen durch Diffusion oder Kappilarwirkung in den Kunststoff der Borsten 3 eindringt. Bei der Benutzung der Zahnbürste und durch die dadurch bewirkte Anfeuchtung wird das oligodynamische Material über die gesamte Borstenlänge verteilt und kann bis zu seiner vollständigen Auswaschung während der Benutzungsdauer eine antibakterielle und keimtötende Wirkung ausüben.

## Patentansprüche

1. Verfahren zur Herstellung einer Zahnbürste (1) aus Kunststoff, insbesondereeiner Wechselzahnbürste, beiwelcher ein Borstenträger und die Borsten (3) aus Kunststoff bestehen, wobei zunächst ein Halteende (6) und ein Benutzungsende (7) aufweisende Borsten (3) insbesondere zu Borstenbüscheln zusammengefaßt und die Halteenden (6) in Lochungen (5) einer Halteplatte (4) oder des Zahnbürstenkörpers (2) eingebracht werden, wonach die an der Halteplatte (4) oder dem Bürstenkörper (2) auf der den Benutzungsenden (7) abgewandten Seite befindlichen Halteenden (6) der Borsten (3) miteinander und/oder mit der Halteplatte (4) oder dem Bürstenkörper (2) verschmolzen werden, **dadurch gekennzeichnet, daß** vor dem Verschmelzen auf wenigstens einen Teil der Halteenden (6) der Borsten (3) oligodynamisches Material (9) aufgetragen wird, daß dann die Halteenden (6) miteinander verschweißt und/oder verschmolzen werden und daß dabei das oligodynamische Material (9) in den erweichten oder verflüssigten Kunststoff eingedrückt und verteilt wird.

2. Verfahren nach Anspruch 1, **dadurch gekennzeichnet, daß** das oligodynamische Material (9) an den Halteenden (6) aller Borstenbüschel aufgetragen wird.

3. Verfahren nach Oberbegriff des Patentanspruches 1, **dadurch gekennzeichnet, daß** nach dem Verschweißen und/oder Verschmelzen der Halteenden (6) der Borsten (3) miteinander und/oder mit der Halteplatte (4) oder dem Bürstenkörper (2) auf die Schmelzstellen zumindest bereichsweise oligodynamisches Material aufgetragen wird, welches in den Kunststoff und in die Borsten (3) eindringt.

4. Verfahren nach einem der Ansprüche 1 bis 3, **dadurch gekennzeichnet, daß** die Borsten (3) oder Borstenbüschel derart ausgerichtet werden, daß ihre zu verschmelzenden Halteenden (6) beim Verschmelzen oder Verschweißen höher als die Benutzungsenden (7) angeordnet sind und in etwa einer Ebene liegen, und daß das oligodynamische Material (9) auf dieser Ebene aufgetragen, beispielsweise als Suspension oder Lösung oder Dispersion aufgestrichen, aufgesprüht, aufgetropft und/oder aufgedruckt wird.

5. Verfahren nach Anspruch 4, **dadurch gekennzeichnet, daß** die Borsten (3) oder Borstenbüschel beim Verschmelzen und Verschweißen etwa vertikal angeordnet sind und die zu verschweißenden und zu verschmelzenden Halteenden (6) in einer etwa horizontalen Ebene liegen, auf die das oligodynamische Material (9) vor oder nach dem Verschmelzen aufgetragen wird.

6. Verfahren nach einem der Ansprüche 1 bis 5, **dadurch gekennzeichnet, daß** das oligodynamische Material (9), beispielsweise Silber oder Silbersalz, insbesondere Silberchlorid, mit einem Kunststoff, beispielsweise Polyamid, vermischt und in einem Lösungsmittel wie 2,2,2 Trifluorethanol gelöst wird und daß die Halteenden (6) der Borsten (3) vor oder nach dem Verschmelzen mit dieser Mischung benetzt oder beschichtet werden.

7. Verfahren nach einem der vorstehenden Ansprüche, **dadurch gekennzeichnet, daß** die Halteenden (6) der insbesondere vertikal ausgerichteten Borsten (3) beim Verschmelzen so weit erweicht oder verflüssigt werden, daß das oligodynamische Material (9) durch Schwerkraft von den Halteenden (6) aus in Richtung zu den Benutzungsenden (7) in die Borsten (3) eindringt.

8. Verfahren nach einem der vorstehenden Ansprüche, **dadurch gekennzeichnet, daß** die mit miteinander verschmolzenen und mit oligodynamischem Material versehenen Halteenden (6) abgedeckt werden, indem die Halteplatte (4) mit den Borsten (3) als Wechselkopf in eine Aussparung (10) des Zahnbürstenkörpers (2) eingefügt oder an einer mit den Borsten (3) versehenen Zahnbürstenkörper (2) eine Abdeckplatte (11) angebracht wird.

## Claims

1. Method of producing a toothbrush (1) made of plastics, particularly a replaceable-head toothbrush, wherein a bristle carrier and the bristles (3) are of plastics, wherein first of all bristles having an attachment end (6) and a working end (7) are combined to form tufts of bristles, in particular, and the attachment ends (6) are placed in holes (5) in a holding plate (4) or in the toothbrush (2), after which the attachment ends (6) of the bristles (3) located on the holding plate (4) or brush body (2) at the end remote from the working ends (7) are fused together and/or to the holding plate (4) or to the brush body (2), **characterised in that** before the fusion an oligodynamic material (9) is applied to at least part of the attachment ends (6) of the bristles (3), then the attachment ends (6) are welded and/or fused together and the oligodynamic material (9) is thereby pressed into the softened or liquefied plastics and distributed therein.

2. Method according to claim 1, **characterised in that** the oligodynamic material (9) is applied to the attachment ends (6) of all the tufts of bristles.

3. Method according to the pre**characterising** clause of claim 1, **characterised in that** after the welding and/or fusion of the attachment ends (6) of the bristles (3) to one another and/or to the holding plate (4) or to the brush body (2) oligodynamic material which penetrates into the plastics and into the bristles (3) is applied to at least some parts of the fusion sites.

4. Method according to one of claims 1 to 3, **characterised in that** the bristles (3) or tufts of bristles are aligned so that their attachment ends (6) which are to be fused are disposed higher than the working ends (7) during the fusion or welding process and are located approximately in a plane, and the oligodynamic material (9) is applied to this plane, for example is painted on, sprayed on, dripped on and/or pressed on as a suspension or solution or dispersion.

5. Method according to claim 4, **characterised in that** the bristles (3) or tufts of bristles are arranged substantially vertically during the fusion or welding process and the attachment ends (6) which are to be welded and fused are disposed in a substantially horizontal plane to which the oligodynamic material (9) is applied before or after the fusion.

6. Method according to one of claims 1 to 5, **characterised in that** the oligodynamic material (9), e.g. silver or silver salt, particularly silver chloride, is mixed with a plastic, e.g. polyamide, and dissolved in a solvent such as 2,2,2-trifluoroethanol and the attachment ends (6) of the bristles (3) are wetted or coated with this mixture before or after the fusion.

7. Method according to one of the preceding claims, **characterised in that** the attachment ends (6) of the bristles (3), which are, in particular, vertically aligned, are softened or liquefied during the fusion process to such an extent that the oligodynamic material (9) penetrates into the bristles (3) by gravity from the attachment ends (6) towards the working ends (7).

8. Method according to one of the preceding claims, **characterised in that** the attachment ends (6) fused together and provided with oligodynamic material are covered by inserting the holding plate (4) with the bristles (3) as a replacement head in a recess (10) in the toothbrush body (2) and mounting a cover plate (11) on a toothbrush body (2) fitted with the bristles (3).

## Revendications

1. Procédé pour la fabrication d'une brosse à dents (1) en plastique, en particulier une brosse à dents interchangeable, dans le cas de laquelle un support de poils et les poils (3) sont en plastique, des poils (3) comprenant une extrémité de maintien (6) et une extrémité d'utilisation (7) étant tout d'abord rassemblés, en particulier en touffes de poils, et les extrémités de maintien (6) étant introduites dans des forures (5) pratiquées dans une plaque de maintien (4) ou dans le corps de brosse à dents (2), à la suite de quoi les extrémités de maintien (6) des poils (3), qui se trouvent sur la plaque de maintien (4) ou sur le corps de brosse (2) du côté opposé aux extrémités d'utilisation (7), étant ensuite fondues ensemble et/ou avec la plaque de maintien (4) ou le corps de brosse (2), **caractérisé en ce qu'**avant la mise en fusion, un matériau oligodynamique (9) est appliqué sur au moins une partie des extrémités de maintien (6) des poils (3), **en ce que** les extrémités de maintien (6) sont ensuite soudées et/ou fondues ensemble et **en ce que** durant cette opération le matériau oligodynamique (9) est poussé et réparti dans le plastique ramolli ou liquéfié.

2. Procédé selon la revendication 1, **caractérisé en ce que** le matériau oligodynamique (9) est appliqué sur les extrémités de maintien (6) de toutes les touffes de poils.

3. Procédé selon le préambule de la revendication 1, **caractérisé en ce qu'**après la soudure et/ou la fusion entre elles et/ou avec la plaque de maintien (4) ou le corps de brosse (2) des extrémités de maintien (6) des poils (3), un matériau oligodynamique, qui pénètre dans le plastique et dans les poils (3), est appliqué au moins par zones sur les endroits de fusion.

4. Procédé selon l'une des revendications 1 à 3, **caractérisé en ce que** lors de leur mise en fusion ou de leur soudure, les poils (3) ou les touffes de poils sont orientés de telle manière que leurs extrémités de maintien à fusionner (6) soient disposées plus haut- que les extrémités d'utilisation (7) et se trouvent à peu près sur un même plan et **en ce que** le matériau oligodynamique (9) est appliqué sur ce plan, par exemple au pinceau, par pulvérisation, par dépôt de gouttes et/ou par pression en tant que suspension, que solution ou que dispersion.

5. Procédé selon la revendication 4, **caractérisé en ce que** lors de la mise en fusion et de la soudure, les poils (3) ou les touffes de poils sont disposés à peu près verticalement et **en ce que** les extrémités de maintien (6) à souder et à fondre ensemble se trouvent dans un plan à peu près horizontal, sur lequel le matériau oligodynamique (9) est appliqué avant ou après la mise en fusion.

6. Procédé selon l'une des revendications 1 à 5, **caractérisé en ce que** le matériau oligodynamique (9), par exemple de l'argent ou du sel d'argent, en particulier du chlorure d'argent, est mélangé avec un matériau synthétique, par exemple du polyamide, et est dissous dans un solvant, comme du trifluoréthanol 2, 2, 2, et **en ce que** les extrémités de maintien (6) des poils (3) sont arrosées avec ce mélange ou enduites de ce mélange avant ou après la mise en fusion.

7. Procédé selon l'une des revendications précédentes, **caractérisé en ce que** lors de la mise en fusion, les extrémités de maintien (6) des poils (3) disposés en particulier dans le sens vertical sont ramollies ou liquéfiées suffisamment pour que le matériau oligodynamique (9) pénètre par gravité dans les poils (3) depuis les extrémités de maintien (6) en direction des extrémités d'utilisation (7).

8. Procédé selon l'une des revendications précédentes, **caractérisé en ce que** les extrémités de maintien (6) fondues entre elles et munies de matériau oligodynamique sont recouvertes, et ceci par le fait que la plaque de maintien (4) avec les poils (3) est introduite en tant que tête interchangeable dans un évidement (10) du corps de brosse à dents (2) ou qu'une plaque de recouvrement (11) est placée sur un corps de brosse à dents (2) muni des poils (3).
